# EUROPÄISCHE PATENTSCHRIFT

(11) **EP 2 323 210 B1**
(45) Veröffentlichungstag und Bekanntmachung des Hinweises auf die Patenterteilung: **25.07.2012**
(21) Anmeldenummer: 11150854.5
(22) Anmeldetag: 06.09.2005
(51) Int. Cl.: H01M 8/24, H01M 8/06, H01M 8/04

(54) **Brennstoffzellensystem**
Fuel cell system
Système de pile à combustible

(30) Priorität: 17.09.2004 DE 102004046004; 07.12.2004 DE 102004059776
(43) Veröffentlichungstag der Anmeldung: 18.05.2011
(62) Teilanmeldung aus: 05782441.9
(73) Patentinhaber: Deutsches Zentrum für Luft- und Raumfahrt e.V., 51147 Köln (DE)
(72) Erfinder: Kindervater, Christof, 70563 Stuttgart (DE); Brinner, Andreas, 71277 Rutesheim (DE); Nedele, Martin, 72768 Reutlingen (DE)
(74) Vertreter: Hoeger, Stellrecht & Partner Patentanwälte

(56) Entgegenhaltungen:
- EP-A- 0 959 512
- EP-A2- 1 263 069
- WO-A-03/090334
- WO-A1-02/01663

## Beschreibung

Die Erfindung betrifft ein Brennstoffzellensystem, umfassend eine Brennstoffzelleneinrichtung mit einem oder mehreren Brennstoffzellenblöcken, in denen chemische Energie in elektrische Energie umwandelbar ist, eine Oxidator-Versorgungseinrichtung für die Brennstoffzelleneinrichtung, eine Brennstoff-Versorgungseinrichtung für die Brennstoffzelleneinrichtung, und eine Steuerungseinrichtung.

Brennstoffzellensysteme, umfassend eine Brennstoffzelleneinrichtung mit einem oder mehreren Brennstoffzellenblöcken, in denen chemische Energie in elektrische Energie umwandelbar ist, eine Oxidator-Versorgungseinrichtung für die Brennstoffzelleneinrichtung, eine Brennstoff-Versorgungseinrichtung für die Brennstoffzelleneinrichtung, und eine Steuerungseinrichtung, sind beispielsweise aus der DE 101 27 600 A1 bzw. C2 oder der DE 101 27 599 A1 bekannt.

Aus der WO 03/090334 A2 ist ein modulares Energieversorgungssystem bekannt, welches ein Elektrolysemodul mit einem ersten Anschlusssatz und ein Leistungsmodul mit einem zweiten Anschlusssatz aufweist. Das erste Anschlusssatzset ist ausgebildet zur Kommunikation mit einer Wasserversorgung und/oder einer Wasserstoffspeichervorrichtung und/oder dem Leistungsmodul. Das Elektrolysemodul und/oder das Leistungsmodul sind getrennt von dem modularen Energieversorgungssystem entfernbar.

Aus der EP 0 959 512 A1 ist ein tragbares Energieerzeugungssystem bekannt, welches eine Brennstoffzelle zur Erzeugung von elektrischer Energie aufweist.

Aus der US 2002/0150806 A1 ist eine Filtervorrichtung bekannt.

Aus der WO 02/01663 A1 ist ein Brennstoffzellensystem mit einer in eine Brennstoffzellenbox eingebrachten Brennstoffzelleneinheit bekannt. Das Brennstoffzellensystem weist zusätzlich eine Gaserzeugungssystem-Box auf, wobei in der Gaserzeugungssystem-Box Komponenten zusammengefasst sind, deren Betriebstemperatur oberhalb von 80°C liegen. Die Gaserzeugungssystem-Box ist thermisch isoliert und die Brennstoffzellenbox, die Gaserzeugungssystem-Box und gegebenenfalls weitere Boxen, welche Komponenten beinhalten, die Wasserstoffgas beinhalten oder transportieren, weisen Boxbelüftungsmittel auf.

Der Erfindung liegt die Aufgabe zugrunde, ein flexibel einsetzbares Brennstoffzellensystem bereitzustellen.

Diese Aufgabe wird bei dem eingangs genannten Brennstoffzellensystem erfindungsgemäß dadurch gelöst, dass die Brennstoffzelleneinrichtung, die Oxidator-Versorgungseinrichtung, die Brennstoff-Versorgungseinrichtung und eine Kühlungseinrichtung, welche der Brennstoffzelleneinrichtung zugeordnet ist, jeweils als Modul ausgebildet sind, wobei in einem Modul die funktionellen Komponenten der jeweiligen Einrichtung in einem Gehäuse angeordnet sind, das entsprechende Modul eine Einheit bildet, welche als Ganzes positionierbar ist, das entsprechende Modul eine Kommunikationsschnittstelle mit Anschlüssen aufweist, und das Kühlungseinrichtungs-Modul mindestens einen Abwärmeluftanschluss aufweist.

Durch die erfindungsgemäße Lösung lassen sich Module getrennt herstellen, einstellen und positionieren. Durch den modularen Aufbau des Brennstoffzellensystems lässt sich dieses auf flexible Weise in eine Anwendung integrieren. Insbesondere ist eine Anpassung an geometrische Gegebenheiten möglich.

Für jedes Modul ist eine definierte Schnittstelle zur Kommunikation mit der Außenwelt bzw. anderen Modulen bezüglich Stoffaustausch (über Stoffströme) und/oder Energieaustausch und/oder Signalaustausch bereitgestellt. Dies ermöglicht es, das Brennstoffzellensystem aus Subsystemen zusammenzustellen, wobei die Subsysteme insbesondere bezüglich der jeweiligen Betriebsparameter getrennt einstellbar sind. Insbesondere lassen sich für jedes Modul die Betriebsparameter bezüglich Stoffströmen, elektrischen Strömen und Signalströmen getrennt einstellen und auch optimieren.

Es ergibt sich eine einfache Zerlegbarkeit und Zusammensetzbarkeit des Brennstoffzellensystems.

Weiterhin lassen sich sicherheitsrelevante Komponenten getrennt ausbilden. Für die Brennstofführung ist dann nur noch das Brennstoff-Versorgungseinrichtungs-Modul und das Brennstoffzelleneinrichtungs-Modul relevant. Die anderen Module sind dann nicht mehr sicherheitsrelevant.

Mit dem erfindungsgemäßen Brennstoffzellensystem lassen sich die in der DE 101 27 599 A1, der DE 101 27 600 A1 und DE 101 27 600 C2 beschriebenen Verfahren durchführen. Ferner lässt sich das erfindungsgemäße Brennstoffzellensystem wie in diesen Druckschriften beschrieben ausbilden. Auf diese Druckschriften wird ausdrücklich Bezug genommen.

Ein entsprechendes Modul weist ein Gehäuse auf, in welchem die funktionellen Komponenten angeordnet sind. Über das Gehäuse lässt sich das Modul als Einheit ausbilden. Ferner lässt sich an dem Gehäuse eine definierte Schnittstelle und insbesondere definierte Kommunikationsschnittstelle anordnen. In dem Gehäuse sind die funktionellen Komponenten geschützt. Beispielsweise ist das Gehäuse zumindest teilweise aus einem durchsichtigen Material hergestellt, so dass Messgeräte wie Druckanzeigen abgelesen werden können.

Insbesondere sind an dem Gehäuse der oder die Anschlüsse angeordnet, über die Module untereinander oder mit entsprechenden Einrichtungen kommunizieren können.

Es kann vorgesehen sein, dass das Gehäuse geschlossen ist. Dadurch werden die funktionellen Komponenten, welche in dem Gehäuse angeordnet sind, geschützt.

Besonders günstig ist es, wenn das Gehäuse gasdicht ist, insbesondere im Falle des Brennstoffzelleneinrichtungs-Moduls und des Brennstoff-Versorgungseinrichtungs-Moduls. Dadurch lässt sich Entweichen von Brennstoff an undefinierten Stellen vermeiden. Das System lässt sich mit einer Sicherheitsbelüftung direkt an die Umgebung versehen.

Die Anschlüsse umfassen insbesondere Stoffanschlüsse, Signalanschlüsse und elektrische Leistungsanschlüsse. Über die Stoffanschlüsse kann ein Stoffaustausch erfolgen. Beispielsweise wird über einen Auskopplungsanschluss des Brennstoff-Versorgungseinrichtungs-Moduls Brennstoff ausgekoppelt und über einen Brennstoffeinkopplungsanschluss der Brennstoffzelleneinrichtung lässt sich in diese Brennstoff einkoppeln. Über Signalanschlüsse können Steuersignale eingekoppelt werden oder es lassen sich Steuersignale auskoppeln. Über elektrische Leistungsanschlüsse kann elektrische Leistung eingekoppelt werden oder (im Falle der Brennstoffzelleneinrichtung) ausgekoppelt werden.

Insbesondere weist das Brennstoffzelleneinrichtungs-Modul Stoffanschlüsse für Oxidator und Brennstoff und einen Anschluss zur Auskopplung elektrischer Leistung auf.

Es kann auch vorgesehen sein, dass das Brennstoffzelleneinrichtungs-Modul mindestens einen Signalanschluss zur Einkopplung von Steuersignalen aufweist. Über solch einen Anschluss lassen sich beispielsweise Steuersignale einkoppeln, um ein Sperrventil getaktet zu öffnen und zu schließen, über das nicht verbrauchter Brennstoff abführbar ist.

Es ist ferner vorgesehen, dass das Brennstoff-Versorgungseinrichtungs-Modul mindestens einen Brennstoffanschluss zur Auskopplung von Brennstoff aufweist. Über diesen Brennstoffanschluss ist eine Verbindung zu der Brennstoffzelleneinrichtung herstellbar.

Es kann auch vorgesehen sein, dass das Brennstoff-Versorgungseinrichtungs-Modul mindestens einen Signalanschluss aufweist.

Es ist ferner vorgesehen, dass das Oxidator-Versorgungseinrichtungs-Modul mindestens einen Oxidatoranschluss zur Auskopplung von Oxidator aufweist. Es lässt sich dadurch Luft mit Luftsauerstoff als Oxidator auskoppeln. Über diesen Anschluss lässt sich die Verbindung mit einer Brennstoffzelleneinrichtung herstellen.

Es kann auch vorgesehen sein, dass das Oxidator-Versorgungseinrichtungs-Modul mindestens einen Signalanschluss aufweist, über den insbesondere Steuerungssignale einkoppelbar sind.

Ganz besonders vorteilhaft ist es, wenn kommunizierende Module über Leitungen verbunden sind. Die Module lassen sich an einer Anwendung zunächst getrennt und unabhängig voneinander positionieren. Die notwendigen Kommunikationsverbindungen bezüglich Stofftransport, Zuführung von elektrischer Leistung und bezüglich Steuerungssignalen werden dann nachträglich entsprechend der geometrischen Gegebenheiten hergestellt. Es ergibt sich dadurch ein flexibler Aufbau, wobei das erfindungsgemäße Brennstoffzellensystem über Subsysteme gebildet ist.

Insbesondere sind die Leitungen von dem oder den Modulen getrennte Elemente.

Es kann vorgesehen sein, dass ein oder mehrere Brennstoffspeicher in das Brennstoff-Versorgungseinrichtungs-Modul integriert sind. Wenn ein Brennstoffspeicher entleert ist, dann wird beispielsweise das Brennstoff-Versorgungseinrichtungs-Modul als Ganzes ausgetauscht.

Es kann auch vorgesehen sein, dass mindestens ein Brennstoffspeicher vorgesehen ist, welcher an die Brennstoffversorgungseinrichtung gekoppelt ist und insbesondere ein externes Element bezogen auf ein Brennstoff-Versorgungseinrichtungs-Modul bildet.

Es können auch ein oder mehrere Brennstoffspeicher-Module vorgesehen sein. Ein Brennstoffspeicher-Modul lässt sich an ein Brennstoff-Versorgungseinrichtungs-Modul ankoppeln. Wenn ein Brennstoffspeicher entleert ist, dann kann ein entsprechendes Brennstoffspeicher-Modul auf einfache Weise ausgetauscht werden.

Ganz besonders vorteilhaft ist es, wenn der mindestens eine Brennstoffspeicher oder das mindestens eine Brennstoffspeicher-Modul als strukturelles Element des Brennstoffzellensystems oder einer Anwendung ausgebildet ist. Dadurch lässt sich die Energieversorgungseinrichtung der Anwendung, welche mit Hilfe des Brennstoffzellensystems gebildet ist, platzsparend ausbilden.

Insbesondere ist der mindestens eine Brennstoffspeicher oder das mindestens eine Brennstoffspeicher-Modul ein Metallhydridspeicher oder umfasst einen solchen. In einem Metallhydridspeicher ist Wasserstoff nicht als freies Gas gespeichert, sonder in gebundener Form. Beispielsweise über Erhitzung lässt sich Wasserstoff aus einem solchen Metallhydridspeicher austreiben. Es treten dabei nicht die Sicherheitsprobleme auf wie bei der Wasserstoffspeicherung in einem Drucktank. Ein Metallhydridspeicher ist ein massives Element, welches entsprechend als strukturelles Element und beispielsweise als tragendes Element für eine Anwendung genutzt werden kann.

Insbesondere ist der mindestens eine Brennstoffspeicher mittels eines oder mehreren Strangpressprofilen gebildet. Entsprechende Metallhydridspeicher sind beispielsweise unter der Bezeichnung MH Hydrogene Storage Tank von SUMITOMO PRECISION PRODUCTS CO., LTD., Japan, erhältlich.

Der Brennstoffzelleneinrichtung ist eine Kühlungseinrichtung zugeordnet. Dadurch lässt sich diese mit einem optimierten Wirkungsgrad betreiben.

Ganz besonders vorteilhaft ist es, wenn die Kühlungseinrichtung so angeordnet und ausgebildet ist, dass mindestens ein Brennstoffspeicher mit Abwärmeluft beaufschlagbar ist. Die Abwärmeluft kann dann dazu genutzt werden, beispielsweise aus einem Metallhydridspeicher Wasserstoff auszutreiben. Dadurch lässt sich der Wirkungsgrad des Brennstoffzellensystems verbessern.

Es ist grundsätzlich möglich, dass die Kühlungseinrichtung mit der Brennstoffzelleneinrichtung in einem Brennstoffzelleneinrichtungs-Modul integriert ist. Erfindungsgemäß ist die Kühlungseinrichtung als Modul ausgebildet.

Das Kühlungseinrichtungs-Modul weist mindestens einen Abwärmeluftanschluss auf. An diesem Anschluss lässt sich Abwärme auskoppeln, um diese beispielsweise einem Metallhydridspeicher zuzuführen.

Günstig ist es, wenn das Kühlungseinrichtungs-Modul mindestens einen Signalanschluss aufweist. Beispielsweise kann dann die entsprechende Kühlungseinrichtung über Steuerungssignale so gesteuert werden, dass sich eine optimale Kühlungswirkung ergibt.

Es kann auch vorgesehen sein, dass die Steuerungseinrichtung als Modul ausgebildet ist. Die Steuerungseinrichtung bildet dann eine eigene Komponente des Brennstoffzellensystems. Insbesondere ist eine zentrale Steuerungseinrichtung realisiert.

Günstigerweise ist mittels der Steuerungseinrichtung eine Ablaufsteuerung gebildet, welche voreingestellte Steuerungssignale sendet. Es erfolgt keine Regelung der Brennstoffzuführung und Oxidatorzuführung zu der Brennstoffzelleneinrichtung, sondern höchstens eine Steuerung. Ein entsprechendes Verfahren ist in der DE 101 27 600 A1 beschrieben, wobei auf dieses Dokument ausdrücklich Bezug genommen wird.

Günstig ist es, wenn elektrische Verbraucher des Brennstoffzellensystems über die Steuerungseinrichtung mit elektrischer Energie versorgt sind. Die Steuerungseinrichtung stellt dann eine definierte Schnittstelle bereit, über die die entsprechenden Module die elektrische Energie in der erforderlichen Form erhalten können.

Günstig ist es, wenn die Betriebsparameter bezüglich Stoffströmen, elektrischer Strömen und Signalströmen für jedes Modul unabhängig einstellbar sind und/oder eingestellt sind. Dadurch ergibt sich bei einfacher Herstellbarkeit eine optimierte Anpassbarkeit des Brennstoffzellensystems an Anwendungen. Jedes Modul lässt sich dabei getrennt optimieren.

Besonders vorteilhaft ist es, wenn in dem Brennstoff-Versorgungseinrichtungs-Modul und/oder Oxidator-Versorgungseinrichtungs-Modul und/oder Brennstoffzelleneinrichtungs-Modul Stofführungen mittels einer Bohrung gebildet sind, wobei diese Bohrung insbesondere durch eine Ausnehmung in einem Vollmaterial hergestellt ist. Dadurch lässt sich innerhalb eines solchen Moduls eine Art von Stofftransport-Bus bereitstellen. Es muss dann keine Rohrführung vorgesehen sein. Insbesondere wenn Brennstoff geführt wird, ist dadurch die Gefahr von Lecks stark verringert. Ein Modul weist beispielsweise ein blockförmiges Kunststoffgehäuse auf. In einem solchen blockförmigen Kunststoffgehäuse lässt sich über eine Bohrung eine Stofführung ausbilden.

Ganz besonders vorteilhaft ist es, wenn für die Oxidator-Versorgungseinrichtung der Druck und der Volumenstrom von auskoppelbarer Luft als Oxidatorträger fest vorgegeben ist. Dadurch lässt sich ein einfach arbeitendes Brennstoffzellensystem ausbilden, wie es in der DE 101 27 600 A1 bzw.
DE 101 27 600 C2 beschrieben ist.

Aus dem gleichen Grund ist es vorteilhaft, wenn für die Brennstoff-Versorgungseinrichtung der Druck auskoppelbaren Brennstoffs fest eingestellt ist.

Insbesondere ist für die Brennstoff-Versorgungseinrichtung die Druckdifferenz für auskoppelbaren Brennstoff in Relation zu von der Oxidator-Versorgungseinrichtung auskoppelbarer Luft als Oxidatorträger fest eingestellt. Eine entsprechende Verfahrensführung ist in der DE 101 27 600 A1 beschrieben, auf die ausdrücklich Bezug genommen wird.

Ganz besonders vorteilhaft ist es, wenn eine Mengenregelung des der Brennstoffzelleneinrichtung zugeführten Brennstoffs durch die elektrische Leistungsaufnahme eines Verbrauchers erfolgt. Dadurch ergibt sich eine einfache Steuerung und Regelung des Brennstoffzellensystems, da der Verbraucher die Brennstoffzuführung "automatisch" regelt.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines erfindungsgemäßen Brennstoffzellensystems in Modulbauweise;
- Figur 2: ein Ausführungsbeispiel eines Oxidator-Versorgungseinrichtungs-Moduls;
- Figur 3: ein Ausführungsbeispiel eines Brennstoffzelleneinrichtungs-Moduls;
- Figur 4: ein Ausführungsbeispiel eines Brennstoff-Versorgungseinrichtungs-Moduls und
- Figur 5: ein Ausführungsbeispiel eines Brennstoffspeicher-Moduls.

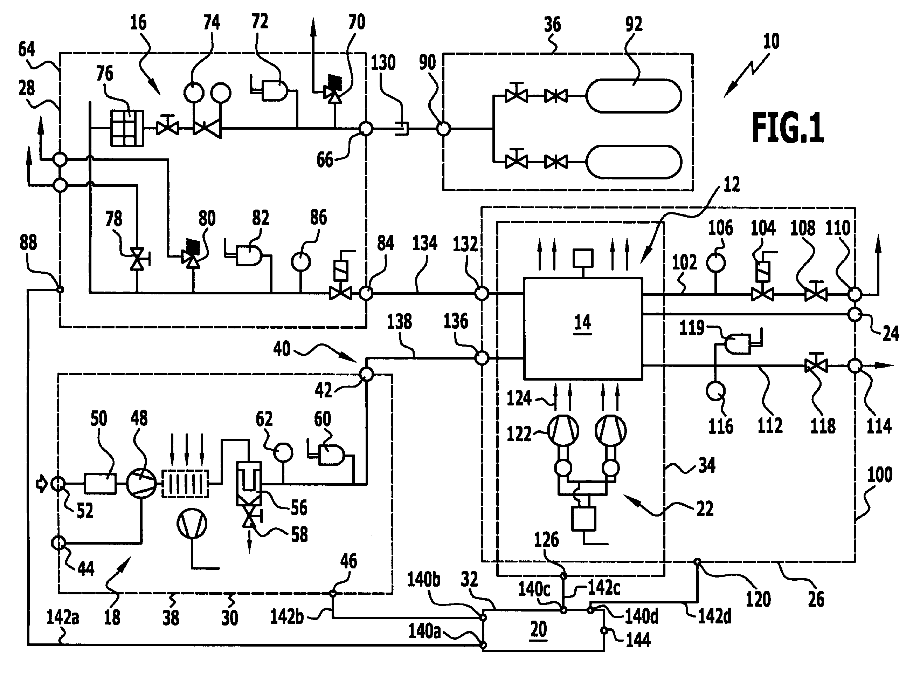

Ein Ausführungsbeispiel eines erfindungsgemäßen Brennstoffzellensystems, welches in Figur 1 gezeigt und dort mit 10 bezeichnet ist, umfasst eine Brennstoffzelleneinrichtung 12 mit einem oder mehreren Brennstoffzellenblöcken 14. Die Brennstoffzelleneinrichtung 12 ist die Brennstoffzellen-Kerneinrichtung des Brennstoffzellensystems 10. Ferner umfasst das Brennstoffzellensystem 10 eine Brennstoff-Versorgungseinrichtung 16, mittels welcher der oder die Brennstoffzellenblöcke 14 der Brennstoffzelleneinrichtung 12 mit Brennstoff versorgbar sind.

Weiterhin umfasst das Brennstoffzellensystem 10 eine Oxidator-Versorgungseinrichtung 18 für die Brennstoffzelleneinrichtung 12, mittels der dem oder den Brennstoffzellenblöcken 14 Oxidator bereitstellbar ist.

Zur Steuerung des Brennstoffzellensystems 10 ist eine Steuerungseinrichtung 20 vorgesehen.

Dem oder den Brennstoffzellenblöcken 14 kann eine Kühlungseinrichtung 22 zugeordnet sein.

Bei den Brennstoffzellen des oder der Brennstoffzellenblöcke 14 handelt es sich insbesondere um Polymermembran-Brennstoffzellen (PEFC), bei denen der Elektrolyt durch eine protonenleitende Membran gebildet ist. Neben der Funktion des Elektrolyten ist die Membran auch Katalysatorträger für die anodischen und kathodischen Elektrokatalysatoren und dient als Separator für die gasförmigen Reaktanten. Als Brennstoff wird Wasserstoff eingesetzt und als Oxidator Sauerstoff und insbesondere Luftsauerstoff. Der Brennstoffzelleneinrichtung 12 wird dann Luft mit Luftsauerstoff als Oxidator zugeführt.

In dem oder den Brennstoffzellenblöcken 14 wird chemische Energie durch die kalte Verbrennung des Brennstoffs mit dem Oxidator in elektrische Energie umgewandelt. Diese elektrische Energie ist über einen Anschluss 24 an einen Verbraucher abgebbar.

Das Brennstoffzellensystem 10 ist modular aufgebaut mit einem Brennstoffzelleneinrichtungs-Modul 26, einem Brennstoff-Versorgungseinrichtungs-Modul 28 und einem Oxidator-Versorgungseinrichtungs-Modul 30.

Ferner ist ein Steuerungseinrichtungs-Modul 32 vorgesehen, welches die Steuerungseinrichtung 20 umfasst.

Die Kühlungseinrichtung 22 ist in ein Kühlungseinrichtungs-Modul 34 integriert.

Bei dem gezeigten Ausführungsbeispiel ist ein Brennstoffspeicher-Modul 36 vorgesehen.

Es ist alternativ auch möglich, dass Brennstoffspeicher in das Brennstoff-Versorgungseinrichtungs-Modul 28 integriert sind.

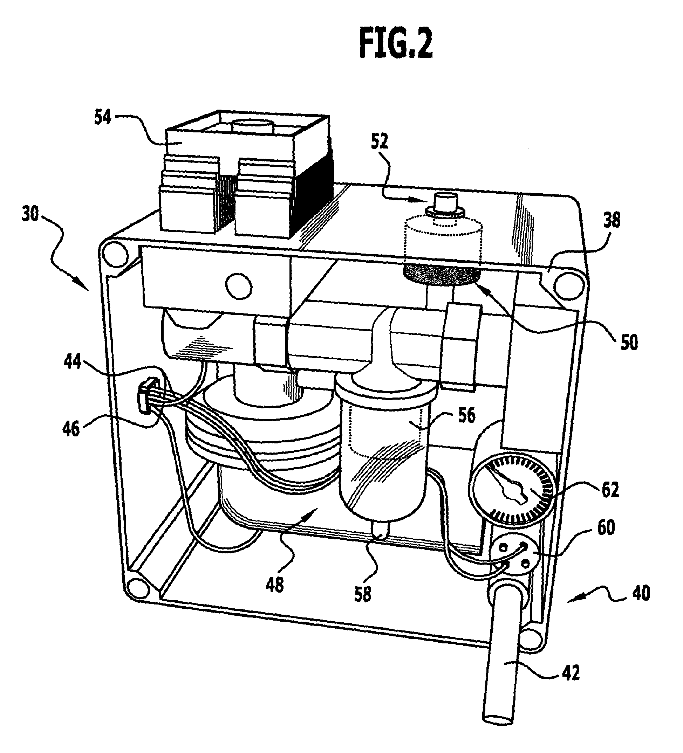

In das Oxidator-Versorgungseinrichtungs-Modul 30 (Figuren 1 und 2) sind die funktionellen Komponenten der Oxidator-Versorgungseinrichtung 18 integriert. Das Oxidator-Versorgungseinrichtungs-Modul 30 weist ein geschlossenes Gehäuse 38 auf. Das Gehäuse kann gasdicht ausgestaltet sein. Beispielsweise ist das Gehäuse durchsichtig. Ein mögliches Material ist Plexiglas.

Das Oxidator-Versorgungseinrichtungs-Modul 30 ist mit einer Kommunikationsschnittstelle 40 versehen, welche einen Ausgangsanschluss 42 aufweist, über den Oxidator auskoppelbar ist. Insbesondere ist Luft als Oxidatorträger mit Luftsauerstoff als Oxidator auskoppelbar.

Ferner ist ein elektrischer Anschluss 44 vorgesehen, über den elektrische Energie in das Oxidator-Versorgungseinrichtungs-Modul 30 zur Bereitstellung an elektrische Verbraucher dieses Moduls einkoppelbar ist.

Weiterhin kann ein Signalanschluss 46 zur Einkopplung von Steuerungssignalen vorgesehen sein.

Die entsprechenden Anschlüsse 42, 44 und 46 sind an dem Gehäuse 38 angeordnet.

In dem Gehäuse 38 ist ein Luftverdichter 48 angeordnet. Diesem ist ein Filter 50 vorgeschaltet. Das Gehäuse 38 weist eine oder mehrere Luftzuführungsöffnungen 52 auf, über die Luft dem Luftverdichter 48 zuführbar ist, wobei der Filter 50 durch die zugeführte Luft passiert werden muss. An der oder den Luftzuführungsöffnungen 52 ist ein Luftförderer und Kühler 54 angeordnet, welcher insbesondere über einen Elektromotor angetrieben ist.

In dem Gehäuse 38 ist dem Luftverdichter 48 ein Wasserabscheider 56 nachgeschaltet. Über diesen Wasserabscheider 56 lässt sich durch das Oxidator-Versorgungseinrichtungs-Modul 30 durchgeführte Luft entfeuchten. Dem Wasserabscheider 56 ist dabei ein Stellelement 58 zugeordnet, welches in Verbindung mit einem Ausgang steht, über den Wasser abgelassen werden kann.

Ferner umfasst das Oxidator-Versorgungseinrichtungs-Modul 30 einen Druckschalter 60 und eine Druckanzeige 62. Mittels des Druckschalters 60 lässt sich ein bestimmter Luftstrom des Luftverdichters 48 überprüfen. Dieser Luftstrom wird durch eine Stellvorrichtung (wie beispielsweise das Einstellventil 118) fest vorgegeben. Der Luftstrom lässt sich an dem Ausgangsanschluss 42 auskoppeln.

Für die Einstellung des Versorgungseinrichtungs-Moduls 30 kann eine Stellvorrichtung auch direkt an das Modul 30 angeschlossen und/oder nur vorübergehend angeschlossen werden.

Das Oxidator-Versorgungseinrichtungs-Modul 38 bildet eine als Ganzes positionierbare Einheit. Die Verbindung mit dem Steuereinrichtungs-Modul 32 erfolgt über die Kommunikationsschnittstelle 40. Die Verbindung mit dem Brennstoffzelleneinrichtungs-Modul 26 erfolgt über den Anschluss 42 (als Stoffstrom-Schnittstelle). Elektrische Verbraucher des Oxidator-Versorgungseinrichtungs-Moduls 30 werden über das Steuereinrichtungs-Modul 32 mit elektrischer Energie (die an dem elektrischen Anschluss 44 eingekoppelt wird) versorgt.

Das Brennstoff-Versorgungseinrichtungs-Modul 28 weist ein Gehäuse 64 auf, in welchem die funktionellen Komponenten der Brennstoff-Versorgungseinrichtung 16 angeordnet sind. Das Gehäuse 64 ist insbesondere geschlossen und gasdicht ausgebildet. Es ist vorzugsweise vorgesehen, dass Führungen für Brennstoff innerhalb des Brennstoff-Versorgungseinrichtungs-Moduls 28 rohrfrei ausgebildet sind. Beispielsweise ist das Gehäuse 64 mittels eines Plexiglasblocks gebildet und die entsprechenden Strömungsführungen sind durch Bohrungen in dem Plexiglasblock gebildet. Es wird dadurch eine Art von Bussystem für die Strömungsführung des Brennstoffs innerhalb des Brennstoff-Versorgungseinrichtungs-Moduls 28 bereitgestellt.

Bei dem in Figur 1 gezeigten Ausführungsbeispiel sind Brennstoffspeicher außerhalb des Brennstoff-Versorgungseinrichtungs-Moduls 28 angeordnet. Es ist dazu ein eigenes Brennstoffspeicher-Modul 36 vorgesehen. Um Brennstoff, welcher von dem Brennstoffspeicher-Modul 36 geliefert wird, einkoppeln zu können, ist an dem Gehäuse 64 ein Anschluss 66 zur Einkopplung von Brennstoff vorgesehen. Dieser Anschluss 66 steht in fluidwirksamer Verbindung mit einer Brennstofführung 68 innerhalb des Gehäuses 64. An diese Brennstoffführung 68 ist ein Sicherheitsventil 70 gekoppelt. Weiterhin ist ein Druckschalter 72 vorgesehen, über den der Druck des innerhalb des Gehäuses 64 geführten Brennstoffs (insbesondere Wasserstoff) überprüfbar ist. Dem Druckschalter 72 ist eine Druckminderer-/Einstellvorrichtung 74 mit Druckanzeige nachgeschaltet. Weiterhin ist eine Flammensperre 76 vorgesehen.

Auf die Flammensperre 76 folgend ist ein Ablassventil 78 in der Brennstoffführung 68 angeordnet. Über das Ablassventil 78 lässt sich in dem Gehäuse 64 befindlicher gasförmiger Brennstoff auskoppeln.

Weiterhin ist ein weiteres Sicherheitsventil 80 vorgesehen.

Über einen weiteren Druckschalter 82 lässt sich der Druck von an einem Anschluss 84 auskoppelbaren Brennstoff überprüfen. Über eine Druckanzeige 86 ist dieser Druck anzeigbar.

Das Brennstoff-Versorgungseinrichtungs-Modul 28 weist eine Kommunikationsschnittstelle auf, welche die Anschlüsse 66 und 84 umfasst. Weiterhin kann ein Steuersignalanschluss 88 vorgesehen sein. Für die Einkopplung von elektrischer Energie zur Bereitstellung an elektrische Verbraucher des Brennstoff-Versorgungseinrichtungs-Moduls 28 kann ein elektrischer Anschluss vorgesehen sein (in Figur 1 nicht gezeigt).

Das Brennstoff-Versorgungseinrichtungs-Modul 28 bildet eine Einheit, welche als Ganzes positionierbar ist.

Das Brennstoffspeicher-Modul 36 weist eine Schnittstelle 90 auf, über welche Brennstoff auskoppelbar ist und insbesondere dem Brennstoff-Versorgungseinrichtungs-Modul 28 zuführbar ist. Das Brennstoffspeicher-Modul 36 weist einen oder mehrere Brennstoffspeicher 92 auf, in denen beispielsweise Wasserstoff gasförmig gespeichert ist.

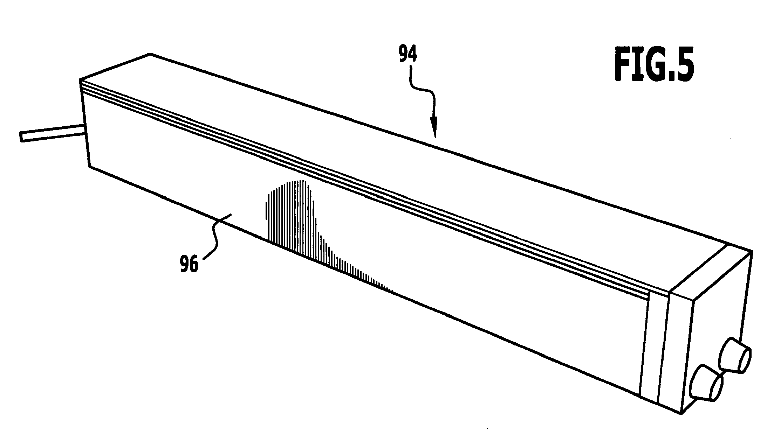

Es können auch ein oder mehrere Metallhydridspeicher 94 (Figur 5) vorgesehen sein. Ein solcher Metallhydridspeicher 94 ist insbesondere mittels eines Strangpressprofils 96 gebildet.

Ein solcher Metallhydridspeicher 94 kann ein strukturelles Element des Brennstoffzellensystems 10 oder einer Anwendung sein. Da der Metallhydridspeicher 94 mit seinem Strangpressprofil 96 mechanisch belastbar ist, kann er auch eine tragende Funktion beispielsweise in einem Fahrzeug übernehmen, um Fahrzeugteile abzustützen oder das Brennstoffzellensystem 10 mit seinen Modulen zu halten oder einzelne Module des Brennstoffzellensystems 10 zu halten.

Das Brennstoffspeicher-Modul 36 ist insbesondere so angeordnet und ausgebildet, dass es austauschbar ist. Nach der Entleerung kann es dann entnommen werden und es kann ein neues Brennstoffspeicher-Modul 36 eingesetzt werden mit gefülltem Brennstoffspeicher 92 bzw. gefüllten Brennstoffspeichern 92.

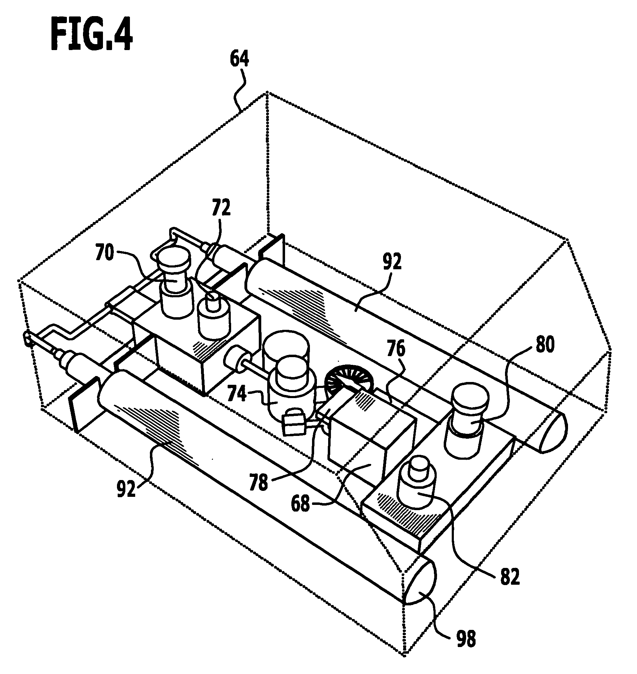

Es ist auch möglich, wie in Figur 4 schematisch gezeigt, dass Brennstoffspeicher 98 in das Gehäuse 64 des Brennstoff-Versorgungseinrichtungs-Moduls 28 integriert sind. Es muss dann kein getrenntes Brennstoffspeicher-Modul 36 vorgesehen werden, sondern es ist ein Kombinationsmodul gebildet, welches die Brennstoffversorgungseinrichtung 16 und den oder die Brennstoffspeicher umfasst. Ein solches Brennstoff-Versorgungseinrichtungs-Modul weist prinzipiell die gleichen funktionellen Komponenten auf, wie anhand des Brennstoff-Versorgungseinrichtungs-Moduls 28 beschrieben. Es werden deshalb in Figur 4 die gleichen Bezugszeichen verwendet.

Es ist insbesondere vorgesehen, dass der Brennstoff, welcher an dem Anschluss 84 auskoppelbar ist, auf einen über den Druckschalter 82 vorgegebenen festen Druckwert eingestellt ist. Über die Druckanzeige 86 wird dieser Druckwert angezeigt.

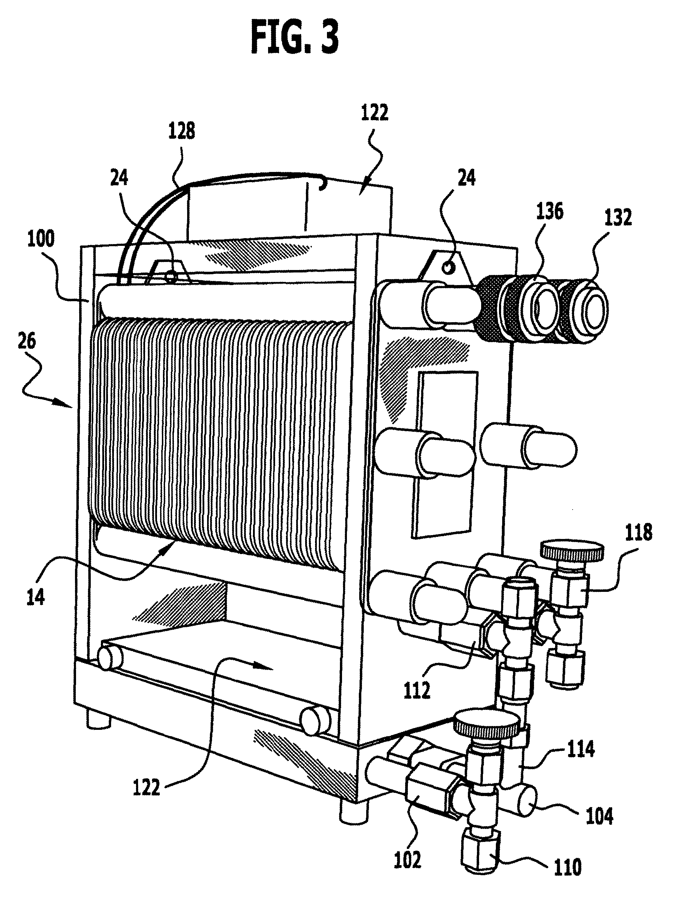

Das Brennstoffzelleneinrichtungs-Modul 26 weist ein Gehäuse 100 auf (Figuren 1 und 3). Das Gehäuse ist insbesondere geschlossen mit definierter Kühlluftführung ausgebildet. Beispielsweise ist es durchsichtig.

In dem Gehäuse 100 sind der oder die Brennstoffzellenblöcke 14 angeordnet. Ferner ist in dem Gehäuse 100 eine Brennstoff-Abführungsleitung 102 angeordnet. An dieser Abführungsleitung 102 sitzt ein zeitlich steuerbares (Sperr-)Ventil 104. Bei diesem handelt es sich insbesondere um ein elektromagnetisches Ventil. Über eine Druckanzeige 106 wird der Druck angezeigt.

Weiterhin kann ein Einstellventil 108 vorgesehen sein, mit dem der Druckabfall bei Öffnung des Ventils 104 eingestellt werden kann.

Die Abführungsleitung 102 mündet in einen Ausgangsanschluss 110, über den nicht verbrauchter Brennstoff abführbar ist.

In dem Gehäuse 100 ist auch eine Oxidator-Abführungsleitung 112 und insbesondere Luft-Abführungsleitung angeordnet. Diese mündet in einen Ausgangsanschluss 114. An der Abführungsleitung 112 ist eine Druckanzeige 116 gekoppelt. Ferner ist ein Einstellventil 118 vorgesehen, um den Volumenstrom der abgeführten Luft einstellen zu können.

An der Abführungsleitung 112 kann ein Temperaturschalter 119 vorgesehen sein.

Das Brennstoffzelleneinrichtungs-Modul 26 weist einen Steuersignalanschluss 120 auf, über den Steuersignale einkoppelbar sind. Insbesondere ist dabei das Ventil 104 (welches ein Sperrventil ist) ansteuerbar. Dieses Sperrventil 104 wird so gesteuert, dass es entweder offen oder geschlossen ist. Es ist getaktet steuerbar und kann dabei so getaktet geöffnet werden, dass für eine Brennstoffentspannung von dem Brennstoffzellenblock 14 her gesorgt ist.

Der Anschluss 24, über welchen externe elektrische Verbraucher mit elektrischer Leistung versorgt sind, ist an dem Gehäuse 100 angeordnet.

Es können auch elektrische Anschlüsse vorgesehen sein (in der Figur 1 nicht gezeigt), über die elektrische Leistung für interne Verbraucher des Brennstoffzelleneinrichtungs-Moduls 26 einkoppelbar ist.

Über die beschriebenen Anschlüsse ist eine Kommunikationsschnittstelle für das Brennstoffzelleneinrichtungs-Modul 26 gebildet.

Das Brennstoffzelleneinrichtungs-Modul 26 bildet eine Einheit, die als Ganzes getrennt von den anderen Modulen positionierbar ist.

Es ist ein separates Kühlungseinrichtungs-Modul 34 vorgesehen, welches an das Brennstoffzelleneinrichtungs-Modul 26 koppelbar ist.

Beispielsweise umfasst ein Kühlungseinrichtungs-Modul 34 einen oder mehrere Lüfter 122, über welche der oder die Brennstoffzellenblöcke 14 mit einem Luftstrom 124 zur Kühlung beaufschlagbar sind. Das Kühlungseinrichtungs-Modul 34 weist einen elektrischen Anschluss auf, über den entsprechende Energie zum Betreiben des oder der Lüfter 122 einkoppelbar ist (in der Zeichnung nicht gezeigt). Ferner kann ein Steuersignalanschluss 126 vorgesehen sein.

Günstig ist es, wenn das Kühlungseinrichtungs-Modul 34 einen oder mehrere Anschlüsse 128 zur Abführung von Abwärmeluft aufweist. Beispielsweise kann dann über entsprechende Verbindungsleitungen die Abwärmeluft an einen Metallhydridspeicher 94 geführt werden, um diesen zur Wasserstoffabgabe zu aktivieren.

Bei der erfindungsgemäßen Lösung sind das Brennstoffzelleneinrichtungs-Modul 26, das Brennstoff-Versorgungseinrichtungs-Modul 28, das Oxidator-Versorgungseinrichtungs-Modul 30 und das Steuerungseinrichtungs-Modul 32 getrennt und unabhängig voneinander positionierbar. Die Kommunikation untereinander erfolgt über die entsprechenden Schnittstellen:
Zur direkten Ankopplung des Brennstoffspeicher-Moduls 36 ist beispielsweise eine Kupplung 130 und insbesondere eine Schnellkupplung vorgesehen. Eine Brennstoffleitung ist dann über diese Kupplung gebildet.

Es ist auch möglich, dass eine Verbindung über eine Leitung erfolgt, welche an den Anschluss 66 der Brennstoff-Versorgungseinrichtungs-Moduls 28 angekoppelt wird und an die Schnittstelle 90 des Brennstoffspeicher-Moduls 36 angekoppelt wird.

Das Brennstoff-Versorgungseinrichtungs-Modul 28 kommuniziert mit dem Brennstoffzelleneinrichtungs-Modul 26 über seinen Ausgangsanschluss 84 für Brennstoff. An einem Eingangsanschluss 132 des Brennstoffzelleneinrichtungs-Moduls 26 kann Brennstoff eingekoppelt werden. Zur Führung des Brennstoffs zwischen dem Brennstoff-Versorgungseinrichtungs-Modul 28 und dem Brennstoffzelleneinrichtungs-Modul 26 ist eine Leitung 134 vorgesehen, welche ein von den beiden Modulen getrenntes Element ist. Die Leitung wird je nach Position und Abstand der beiden Module gewählt.

Luft mit Luftsauerstoff als Oxidator lässt sich an dem Ausgangsanschluss 42 des Oxidator-Versorgungseinrichtungs-Moduls 30 auskoppeln. Das Brennstoffzelleneinrichtungs-Modul 26 weist einen Eingangsanschluss 136 auf, über den sich Luft einkoppeln lässt. Die Anschlüsse 42 und 136 lassen sich über eine Leitung 138 verbinden, wobei diese Leitung 138 ein von dem Oxidator-Versorgungseinrichtungs-Modul 30 und dem Brennstoffzelleneinrichtungs-Modul 26 getrenntes Element ist.

Das Steuerungseinrichtungs-Modul 32 bildet ebenfalls eine Einheit, welche als Ganzes unabhängig von den anderen Modulen positionierbar ist. Es weist entsprechende Anschlüsse 140a, 140b, 140c, 140d auf, über die Steuersignale an mit Steuersignalen beaufschlagbare Module auskoppelbar sind. An die Anschlüsse lassen sich Steuersignalleitungen 142a usw. koppeln, um die Steuersignale übertragen zu können.

Ferner weist das Steuerungseinrichtungs-Modul 32 einen oder mehrere Anschlüsse 144 für elektrische Energie auf. Aus diesen lässt sich elektrische Energie auskoppeln und über entsprechende Leistungen an entsprechende Energieanschlüsse der Module koppeln. Dadurch lassen sich elektrische Verbraucher der entsprechenden Module dann mit Energie versorgen.

Das Brennstoffzellensystem 10 funktioniert so, dass Zuführungsparameter von Brennstoff (über das Brennstoff-Versorgungseinrichtungs-Modul 28) und Oxidator (über das Oxidator-Versorgungseinrichtungs-Modul 30) fest vorgegeben werden, wobei auf der Zuführungsseite der Druck des einem Brennstoffzellenblock 14 zugeführten Brennstoffs vorgegeben wird, eine kontinuierliche Wasserstoffabführung aus einem Brennstoffzellenblock 14 gesperrt wird und eine Menge des einem Brennstoffzellenblock 14 zugeführten Brennstoffs durch die Leistungsaufnahme eines (externen) Verbrauchers geregelt wird.

Ein solches Verfahren sowie weitere Verfahrensdetails und die detaillierte Ausbildung des entsprechenden Brennstoffzellensystems sind in der DE 100 27 600 A1 und DE 100 27 600 C2 sowie der DE 101 27 599 A1 beschrieben. Auf diese Dokumente wird Bezug genommen.

Insbesondere ist mittels der Steuerungseinrichtung 20 eine Ablaufsteuerung gebildet, welche voreingestellte Steuerungssignale sendet. Eine Regelung der Zuführung ist bei der beschriebenen Verfahrensdurchführung nicht notwendig.

Erfindungsgemäß wird ein Brennstoffzellensystem bereitgestellt, welches aus mindestens bezüglich der Positionierbarkeit unabhängigen Subsystemen zusammengesetzt ist, nämlich dem Brennstoffzelleneinrichtungs-Modul 26, dem Brennstoff-Versorgungseinrichtungs-Modul 28, dem Oxidator-Versorgungseinrichtungs-Modul 30 und dem Steuerungseinrichtungs-Modul 32.

Die Module weisen definierte Schnittstellen zur Kommunikation mit anderen Modulen auf. Die Module sind getrennt. In ihnen sind die entsprechenden funktionellen Komponenten fest angeordnet, so dass ein Modul als Einheit positionierbar ist. Verbindungselemente und insbesondere Leitungen verbinden miteinander kooperierende Module.

Pro Modul lassen sich die Betriebsparameter und insbesondere Stoffströme, elektrische Ströme und Signalströme separat einstellen.

Die Module lassen sich getrennt herstellen.

Ein sicherheitsrelevanter Aspekt ist die Brennstofführung in dem Brennstoffzellensystem 10. Durch die Modulbauweise ist aber nicht das Brennstoffzellensystem 10 als Ganzes betroffen, sondern nur die Module, in denen Brennstoff geführt wird, d. h. das Brennstoff-Versorgungseinrichtungs-Modul 28 (gegebenenfalls auch das Brennstoffspeicher-Modul 36) sowie das Brennstoffzelleneinrichtungs-Modul 26 und die Leitung 134. Innerhalb des Brennstoffzelleneinrichtungs-Moduls 26 und des Brennstoff-Versorgungseinrichtungs-Moduls 28 lässt sich der Brennstoff beispielsweise in Bohrungen führen, welche durch Ausnehmungen in einem Vollmaterial gebildet sind. Es sind dadurch keine Rohre notwendig, die leckschlagen können. Auch lassen sich die entsprechenden Module 26 und 28 gasdicht ausbilden, während das gesamte Brennstoffzellensystem 10 dann nicht mehr gasdicht ausgebildet werden muss.

Weiterhin lassen sich die Module 26 und 28 mit einer Sicherheitsbelüftung an die Umgebung außerhalb des Gesamtsystems versehen.

Durch die Modularisierung des Brennstoffzellensystems 10 lässt sich dieses flexibel aufbauen. Insbesondere ist eine Anpassung an geometrische Gegebenheiten möglich. Weiterhin lässt sich jedes Modul für sich optimieren.

Die Leitungen zwischen Modulen sind unabhängig von den Modulen. Sie lassen sich beispielsweise über Sicherheitskupplungen, wenn Stofftransportleitungen vorgesehen sind, an die Module anschließen.

Auch eine leichte Reparatur oder Austausch von Komponenten des Brennstoffzellensystems 10 ist möglich, da Module als Ganzes ausgetauscht werden können. Beispielsweise wird ein Brennstoff-Versorgungseinrichtungs-Modul und/oder ein Brennstoffspeicher-Modul als Ganzes ausgetauscht.

Weiterhin ergibt sich auch eine leichte Zerlegbarkeit und Zusammensetzbarkeit des Brennstoffzellensystems 10.

Insbesondere wenn Metallhydridspeicher 94 eingesetzt werden, dann kann ein Brennstoffspeicher oder ein Brennstoffspeicher-Modul auch ein strukturelles Element einer Anwendung bilden. Insbesondere kann ein solcher Metallhydridspeicher als tragendes Strukturelement eingesetzt werden. Der nötige Brennstoff wird dabei "on board" mitgeführt. Der notwendige Oxidator stammt aus der Umgebungsluft.

Erfindungsgemäß wird ein einfaches Brennstoffzellensystem 10 bereitgestellt, welches insbesondere luftgekühlt ist. Es lässt sich auf flexible Weise aufgrund seines modularen Aufbaus in eine Anwendung integrieren. Der Betrieb muss nicht beaufsichtigt werden.

## Patentansprüche

1. Brennstoffzellensystem, umfassend eine Brennstoffzelleneinrichtung (12) mit einem oder mehreren Brennstoffzellenblöcken (14), in denen chemische Energie in elektrische Energie umwandelbar ist, eine Oxidator-Versorgungseinrichtung (18) für die Brennstoffzelleneinrichtung (12), eine Brennstoff-Versorgungseinrichtung (16) für die Brennstoffzelleneinrichtung (12), und eine Steuerungseinrichtung (20), wobei die Brennstoffzelleneinrichtung (12), die Oxidator-Versorgungseinrichtung (18), die Brennstoff-Versorgungseinrichtung (16) und eine Kühlungseinrichtung (22), welche der Brennstoffzelleneinrichtung (12) zugeordnet ist, jeweils als Modul (26; 30; 28; 34) ausgebildet sind, wobei in einem Modul (26; 30; 28; 34) die funktionellen Komponenten der jeweiligen Einrichtung (12; 18; 16; 22) in einem Gehäuse (100; 38; 64) angeordnet sind, das entsprechende Modul (26; 30; 28; 34) eine Einheit bildet, welche als Ganzes positionierbar ist, das entsprechende Modul (26; 30; 28; 34) eine Kommunikationsschnittstelle (40) mit Anschlüssen (24, 114, 120, 132, 136; 66, 84; 42, 44, 46; 126, 128) aufweist, und das Kühlungseinrichtungs-Modul (34) mindestens einen Abwärmeluftanschluss (128) aufweist.

2. Brennstoffzellensystem nach Anspruch 1, **dadurch gekennzeichnet, dass** an dem Gehäuse (100; 38; 64) der oder die Anschlüsse angeordnet sind, und insbesondere dass das Gehäuse (100; 64) geschlossen ist.

3. Brennstoffzellensystem nach Anspruch 2, **dadurch gekennzeichnet, dass** das Gehäuse (100; 64) gasdicht ist.

4. Brennstoffzellensystem nach einem der vorangehenden Ansprüche, **dadurch gekennzeichnet, dass** die Anschlüsse Stoffanschlüsse (84; 42), Signalanschlüsse (46; 88) und elektrische Leistungsanschlüsse umfassen, und insbesondere dass das Brennstoffzelleneinrichtungs-Modul (26) Stoffanschlüsse (132; 136) für Oxidator und Brennstoff und einen Anschluss (24) zur Auskopplung elektrischer Leistung aufweist, und insbesondere dass das Brennstoffzelleneinrichtungs-Modul (26) mindestens einen Signalanschluss (120) zur Einkopplung von Steuerungssignalen aufweist, und insbesondere dass das Brennstoff-Versorgungseinrichtungs-Modul (28) mindestens einen Brennstoffanschluss (84) zur Auskopplung von Brennstoff aufweist, und insbesondere dass das Brennstoff-Versorgungseinrichtungs-Modul (28) mindestens einen Signalanschluss (88) aufweist, und insbesondere dass das Oxidator-Versorgungseinrichtungs-Modul (30) mindestens einen Oxidatoranschluss (42) zur Auskopplung von Oxidator aufweist, und insbesondere dass das Oxidator-Versorgungseinrichtungs-Modul (30) mindestens einen Signalanschluss (46) aufweist, und insbesondere dass das Kühlungseinrichtungs-Modul (34) mindestens einen Signalanschluss (126) aufweist.

5. Brennstoffzellensystem nach einem der vorangehenden Ansprüche, **dadurch gekennzeichnet, dass** kommunizierende Module (28, 26; 30, 26) über Leitungen (134; 138) verbunden sind, und insbesondere dass die Leitungen (134, 138) von dem oder den Modulen (26, 28, 30) getrennte Elemente sind.

6. Brennstoffzellensystem nach einem der vorangehenden Ansprüche, **dadurch gekennzeichnet, dass** ein oder mehrere Brennstoffspeicher in das Brennstoff-Versorgungseinrichtungs-Modul (28) integriert sind.

7. Brennstoffzellensystem nach einem der vorangehenden Ansprüche, **dadurch gekennzeichnet, dass** mindestens ein Brennstoffspeicher (92) vorgesehen ist, welcher an die Brennstoffversorgungseinrichtung (16) gekoppelt ist, und insbesondere dass ein oder mehrere Brennstoffspeicher-Module (36) vorgesehen sind.

8. Brennstoffzellensystem nach Anspruch 7, **dadurch gekennzeichnet, dass** der mindestens eine Brennstoffspeicher (92) oder das mindestens eine Brennstoffspeicher-Modul (36) als strukturelles Element des Brennstoffzellensystems oder einer Anwendung ausgebildet ist.

9. Brennstoffzellensystem nach Anspruch 7 oder 8, **dadurch gekennzeichnet, dass** der mindestens eine Brennstoffspeicher (92) oder das mindestens eine Brennstoffspeicher-Modul (36) ein Metallhydridspeicher ist oder umfasst.

10. Brennstoffzellensystem nach Anspruch 9, **dadurch gekennzeichnet, dass** der mindestens eine Brennstoffspeicher (92) mittels einem oder mehrerer Strangpressprofile (96) gebildet ist.

11. Brennstoffzellensystem nach einem der vorangehenden Ansprüche, **dadurch gekennzeichnet, dass** die Kühlungseinrichtung (22) so angeordnet und ausgebildet ist, dass mindestens ein Brennstoffspeicher (92) mit Abwärmeluft beaufschlagbar ist.

12. Brennstoffzellensystem nach einem der vorangehenden Ansprüche, **dadurch gekennzeichnet, dass** die Steuerungseinrichtung (20) als Modul (32) ausgebildet ist, und insbesondere dass mittels der Steuerungseinrichtung (20) eine Ablaufsteuerung gebildet ist, welche voreingestellte Steuerungssignale sendet, und insbesondere dass elektrische Verbraucher des Brennstoffzellensystems über die Steuerungseinrichtung mit elektrischer Energie versorgt sind.

13. Brennstoffzellensystem nach einem der vorangehenden Ansprüche, **dadurch gekennzeichnet, dass** die Betriebsparameter bezüglich Stoffströmen, elektrischen Strömen und Signalströmen für jedes Modul unabhängig einstellbar sind und/oder eingestellt sind.

14. Brennstoffzellensystem nach einem der vorangehenden Ansprüche, **dadurch gekennzeichnet, dass** in dem Brennstoff-Versorgungseinrichtungs-Modul (28) und/oder Oxidator-Versorgungseinrichtungs-Modul (30) und/oder Brennstoffzelleneinrichtungs-Modul (26) eine Stofführung mittels einer Bohrung gebildet ist.

15. Brennstoffzellensystem nach einem der vorangehenden Ansprüche, **dadurch gekennzeichnet, dass** für die Oxidator-Versorgungseinrichtung (18) der Druck und der Volumenstrom von auskoppelbarer Luft als Oxidatorträger fest vorgegeben ist und/oder dass für die Brennstoff-Versorgungseinrichtung (16) der Druck auskoppelbaren Brennstoffs fest eingestellt ist, und/oder dass für die Brennstoff-Versorgungseinrichtung (16) die Druckdifferenz für auskoppelbaren Brennstoff in Relation zu von der Oxidator-Versorgungseinrichtung (18) auskoppelbarer Luft als Oxidatorträger fest eingestellt ist und/oder dass eine Mengenregelung des der Brennstoffzelleneinrichtung (12) zugeführten Brennstoffs durch die elektrische Leistungsaufnahme eines Verbrauchers erfolgt.

## Claims

1. Fuel cell system comprising a fuel cell device (12) having one or more fuel cell blocks (14) in which chemical energy is convertible into electrical energy, an oxidant supply device (18) for the fuel cell device (12), a fuel supply device (16) for the fuel cell device (12), and a control device (20), wherein the fuel cell device (12), the oxidant supply device (18), the fuel supply device (16) and a cooling device (22) which is associated with the fuel cell device (12) are each configured as a module (26; 30; 28; 34), wherein in a module (26; 30; 28; 34), the functional components of the respective device (12; 18; 16; 22) are disposed in a housing (100; 38; 64), wherein the corresponding module (26; 30; 28; 34) forms a unit which is positionable as a whole, wherein the corresponding module (26; 30; 28; 34) has a communication interface (40) with connectors (24, 114, 120, 132, 136; 66, 84; 42, 44, 46; 126, 128) and the cooling device module (34) has at least one connector (128) for air conveying waste heat.

2. Fuel cell system in accordance with claim 1, **characterized in that** the one or more connectors are located on the housing (100; 38; 64) and in particular that the housing (100; 64) is closed.

3. Fuel cell system in accordance with claim 2, **characterized in that** the housing (100; 64) is gastight.

4. Fuel cell system in accordance with any one of the preceding claims, **characterized in that** the connectors comprise substance connectors (84; 42), signal connectors (46; 88) and electrical power connectors, and in particular that the fuel cell device module (26) has substance connectors (132; 136) for oxidant and fuel and a connector (24) for drawing off electrical power, and in particular that the fuel cell device module (26) has at least one signal connector (120) for feeding in control signals, and in particular that the fuel supply device module (28) has at least one fuel connector (84) for drawing off fuel, and in particular that the fuel supply device module (28) has at least one signal connector (88), and in particular that the oxidant supply device module (30) has at least one oxidant connector (42) for drawing off oxidant, and in particular that the oxidant supply device module (30) has at least one signal connector (46), and in particular that the cooling device module (34) has at least one signal connector (126).

5. Fuel cell system in accordance with any one of the preceding claims, **characterized in that** communicating modules (28, 26; 30, 26) are connected by lines/conduits (134; 138), and in particular that the lines/conduits (134, 138) are elements which are separate from the modules (26, 28, 30).

6. Fuel cell system in accordance with any one of the preceding claims, **characterized in that** one or more fuel storage units are integrated in the fuel supply device module (28).

7. Fuel cell system in accordance with any one of the preceding claims, **characterized in that** at least one fuel storage unit (92) is provided which is coupled to the fuel supply device (16) and in particular that one or more fuel storage modules (36) are provided.

8. Fuel cell system in accordance with claim 7, **characterized in that** the at least one fuel storage unit (92) or the at least one fuel storage module (36) is formed as a structural element of the fuel cell system or of an implementation thereof.

9. Fuel cell system in accordance with claim 7 or 8, **characterized in that** the at least one fuel storage unit (92) or the at least one fuel storage module (36) is or comprises a metal hydride storage unit.

10. Fuel cell system in accordance with claim 9, **characterized in that** the at least one fuel storage unit (92) is formed by means of one or more extrusion profiles (96).

11. Fuel cell system in accordance with any one of the preceding claims, **characterized in that** the cooling device (22) is so located and formed that at least one fuel storage unit (92) can be acted on by air conveying waste heat.

12. Fuel cell system in accordance with any one of the preceding claims, **characterized in that** the control device (20) is formed as a module (32), and in particular that a sequential control is provided by the control device (20), which sends preset control signals, and in particular that electrical consumers of the fuel cell system are supplied with electrical energy by way of the control device.

13. Fuel cell system in accordance with any one of the preceding claims, **characterized in that** the operating parameters in respect of flows of substances, electric currents and signal currents are independently adjustable and/or set for each module.

14. Fuel cell system in accordance with any one of the preceding claims, **characterized in that** in the fuel supply device module (28) and/or the oxidant supply device module (30) and/or the fuel cell device module (26) substance guidance is provided by means of a bore.

15. Fuel cell system in accordance with any one of the preceding claims, **characterized in that** the pressure and the volume flow of air which is adapted to be drawn off as oxidant carrier is preset to a fixed value for the oxidant supply device (18), and/or that the pressure of fuel which is adapted to be drawn off is set to a fixed value for the fuel supply device (16), and/or that the pressure difference for fuel which is adapted to be drawn off in relation to air which is adapted to be drawn off as oxidant carrier from the oxidant supply device (18) is set to a fixed value for the fuel supply device (16), and/or that regulation of the quantity of the fuel supplied to the fuel cell device (12) is effected by the electrical power take-up by a consumer.

## Revendications

1. Système de pile à combustible, comprenant un dispositif de pile à combustible (12) avec un ou plusieurs blocs de pile à combustible (14), à l'intérieur desquels de l'énergie chimique est convertible en énergie électrique, un dispositif d'alimentation en oxydant (18) pour le dispositif de pile à combustible (12), un dispositif d'alimentation en combustible (16) pour le dispositif de pile à combustible (12), et un dispositif de commande (20), où le dispositif de pile à combustible (12), le dispositif d'alimentation en oxydant (18), le dispositif d'alimentation en combustible (16) et un dispositif de refroidissement (22) affecté au dispositif de pile à combustible (12) sont réalisés comme modules respectifs (26 ; 30 ; 28 ; 34), où, dans un module (26 ; 30 ; 28 ; 34), les composants fonctionnels de chaque dispositif (12 ; 18 ; 16 ; 22) sont logés dans un carter (100 ; 38 ; 64), le module (26 ; 30 ; 28 ; 34) correspondant formant une unité pouvant être mise en place en tant qu'ensemble, le module (26 ; 30 ; 28 ; 34) correspondant comportant une interface de communication (40) avec des raccords (24, 114, 120, 132, 136 ; 66, 84 ; 42, 44, 46 ; 126, 128), et le module de dispositif de refroidissement (34) comportant au moins un raccord d'air chaud recyclable (128).

2. Système de pile à combustible selon la revendication 1, **caractérisé en ce que** le ou les raccords sont disposés sur le carter (100 ; 38 ; 64), et en particulier **en ce que** le carter (100 ; 64) est fermé.

3. Système de pile à combustible selon la revendication 2, **caractérisé en ce que** le carter (100 ; 64) est étanche aux gaz.

4. Système de pile à combustible selon l'une des revendications précédentes, **caractérisé en ce que** les raccords comprennent des raccords de substance (84 ; 42), des raccords de signaux (46 ; 88) et des raccords de puissance électrique, en particulier **en ce que** le module de dispositif de pile à combustible (26) comporte des raccords de substance (132 ; 136) pour oxydant et combustible et un raccord (24) pour le découplage de puissance électrique, et en particulier **en ce que** le module de dispositif de pile à combustible (26) comporte au moins un raccord de signal (120) pour le couplage de signaux de commande, et en particulier **en ce que** le module de dispositif d'alimentation en combustible (28) comporte au moins un raccord de combustible (84) pour le découplage de combustible, en particulier **en ce que** le module de dispositif d'alimentation en combustible (28) comporte au moins un raccord de signal (88), et en particulier **en ce que** le module de dispositif d'alimentation en oxydant (30) comporte au moins un raccord d'oxydant (42) pour le découplage d'oxydant, et en particulier **en ce que** le module de dispositif d'alimentation en oxydant (30) au moins un raccord de signal (46), et en particulier **en ce que** le module de dispositif de refroidissement (34) comporte au moins un raccord de signaux (126).

5. Système de pile à combustible selon l'une des revendications précédentes, **caractérisé en ce que** des modules communicants (28, 26 ; 30, 26) sont reliés par des conduites (134 ; 138), et en particulier **en ce que** les conduites (134, 138) sont des éléments séparés du ou des modules (26, 28, 30).

6. Système de pile à combustible selon l'une des revendications précédentes, **caractérisé en ce qu'**un ou plusieurs réservoirs de combustible sont intégrés au module de dispositif d'alimentation en combustible (28).

7. Système de pile à combustible selon l'une des revendications précédentes, **caractérisé en ce qu'**au moins un réservoir de combustible (92) est prévu, lequel est accouplé au dispositif d'alimentation en combustible (16), et en particulier **en ce qu'**un ou plusieurs modules de réservoir de combustible (36) sont prévus.

8. Système de pile à combustible selon la revendication 7, **caractérisé en ce que** le au moins un réservoir de combustible (92) ou le au moins un module de réservoir de combustible (36) est réalisé comme élément structurel du système de pile à combustible ou d'une application.

9. Système de pile à combustible selon la revendication 7 ou 8, **caractérisé en ce que** le au moins un réservoir de combustible (92) ou le au moins un module de réservoir de combustible (36) est un réservoir métallique hybride ou comprend un réservoir métallique hybride.

10. Système de pile à combustible selon la revendication 9, **caractérisé en ce que** le le au moins un réservoir de combustible (92) est constitué d'un ou de plusieurs profilés filés (96).

11. Système de pile à combustible selon l'une des revendications précédentes, **caractérisé en ce que** le dispositif de refroidissement (22) est disposé et réalisé de manière à alimenter au moins un réservoir de combustible (92) en air chaud recyclable.

12. Système de pile à combustible selon l'une des revendications précédentes, **caractérisé en ce que** le dispositif de commande (20) est réalisé comme module (32), et en particulier **en ce qu'**une commande séquentielle est formée au moyen du dispositif de commande (20), laquelle émet des signaux de commande préréglés, et en particulier **en ce que** des récepteurs électriques du système de pile à combustible sont alimentés en énergie électrique au moyen du dispositif de commande.

13. Système de pile à combustible selon l'une des revendications précédentes, **caractérisé en ce que** les paramètres de service relatifs aux courants de substance, aux courant électriques et aux courants de signaux sont réglables et/ou réglés indépendamment pour chaque module.

14. Système de pile à combustible selon l'une des revendications précédentes, **caractérisé en ce qu'**un guidage de substance est formé par un alésage dans le module de dispositif d'alimentation en combustible (28) et/ou le module de dispositif d'alimentation en oxydant (30) et/ou le module de dispositif de pile à combustible (26).

15. Système de pile à combustible selon l'une des revendications précédentes, **caractérisé en ce que** pour le dispositif d'alimentation en oxydant (18), la pression et le débit volumique de l'air découplable en tant que porteur d'oxydant sont prédéterminés, et/ou **en ce que** pour le dispositif d'alimentation en combustible (16), la pression de combustible découplable est fixement réglée, et/ou en ce que pour le dispositif d'alimentation en combustible (16), le différentiel de pression pour le combustible découplable en relation avec l'air découplable en tant que porteur d'oxydant du dispositif d'alimentation en oxydant (18) est fixement réglé, et/ou **en ce qu'**une régulation de débit du combustible alimentant le dispositif de pile à combustible (12) est réalisée par la consommation de puissance électrique d'un récepteur.
